# EUROPEAN PATENT APPLICATION

(11) **EP 3 054 249 A1**
(43) Date of publication of application: **10.08.2016**
(21) Application number: 15153923.6
(22) Date of filing: 05.02.2015
(51) Int. Cl.: F28D 1/02, C12G 1/028, F28D 21/00

(54) **An apparatus for controlling the temperature of food liquids**

(71) Applicant: Sierra S.p.A., 37063 Isola Della Scala (VR) (IT)
(72) Inventor: Riello, Valerio Giordano, 37045 Legnago VR (IT)
(74) Representative: Bonvicini, Davide

(57) **Abstract**

An apparatus (1) for controlling the temperature of a food liquid comprises a tank (10), a heat exchanger (20) arranged in the tank (10) and a heat pump equipment (100) connected with the heat exchanger (20). A submerged pump (50) is arranged in the tank (10) to mix the food liquid.

## Description

### Field of the invention

The present invention relates to the field of controlling the temperature of food liquids, particularly for controlling the temperature of wine must during winemaking.

### Background of the invention

Control of the temperature of food liquids is important in the food industry, for example wineries and breweries.

During winemaking the grapes are crushed into a mixture of liquid and solids, which includes the skins, pulp and seeds, commonly known as must. After crushing, the wine must is transferred into tanks where the fermentation is performed. During the fermentation process, it is important to control the temperature of the must because the temperature of the must has an impact on the quality of the wine. Controlling the temperature of the must is difficult due to the large volume of must stored in the tanks.

It is known to provide stainless steel tanks with side walls through which fluid may be circulated - cool liquid to chill the contents of the tank and warm liquid to heat the contents. However, the rate of heat transfer into the liquid from a surrounding wall is quite low.

Therefore, there is a need for a reliable, effective and efficient apparatus to control the temperature of food liquids.

### Summary of the invention

The present invention relates to an apparatus for controlling temperature of a food liquid according to claim 1.

### Brief description of the drawings

The present invention will now be described in more detail hereinafter with reference to the accompanying drawings, in which some embodiments of the invention are shown.
FIG. 1 is a schematic view of an apparatus according to one embodiment of the present invention,
FIG. 2 is a schematic view of the tank of the apparatus of FIG. 1,

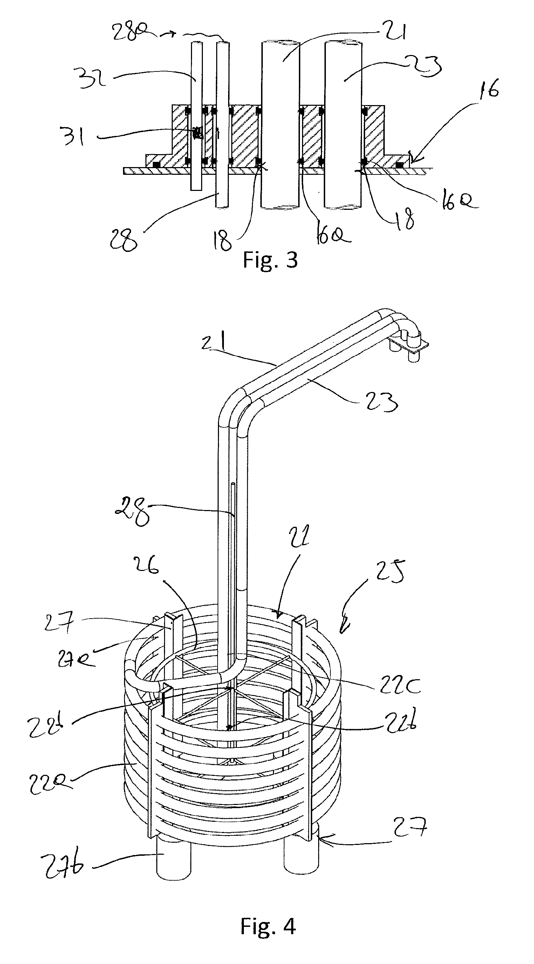

FIG. 3 is a schematic view of a detail of the tank of FIG. 2,
FIG. 4 is a schematic view of the heat exchanger of the apparatus of FIG. 1,
FIG. 5 is a schematic view of the tank of the apparatus of FIG. 1 according to a second embodiment of the present invention.

### Detailed description

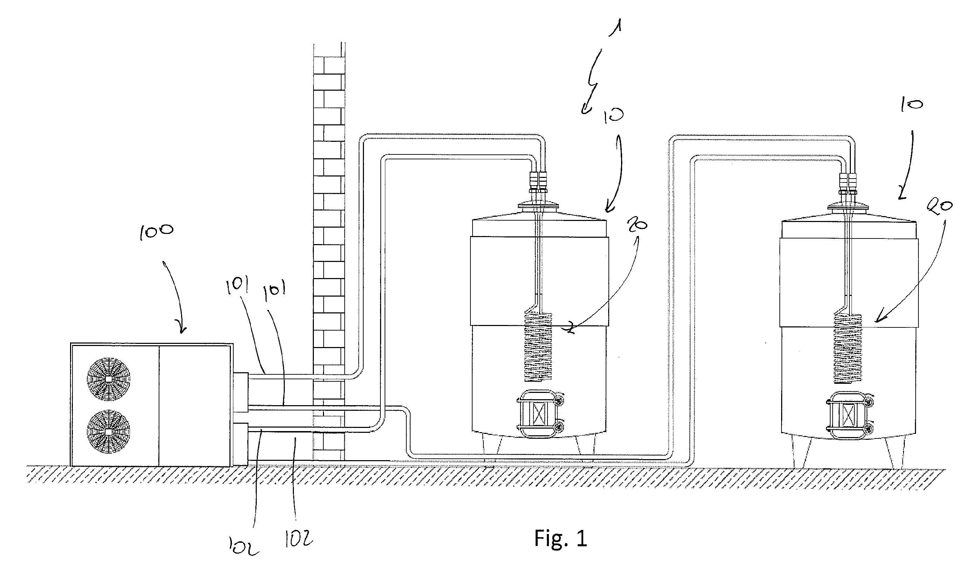

Figures 1 shows an apparatus 1 for controlling the temperature of a food liquid.

The apparatus 1 comprises at least one tank 10, in the example two tanks 10, each tank 10 for storing a food liquid and a heat exchanger 20 arranged in the tank 10 for heating and cooling the food liquid stored in the tank 10.

Hereinafter, reference will be made in a non limiting manner to one tank 10.

The heat exchanger 20 comprises an inlet duct 21, a coil portion 22 and an outlet duct 23.

A heat pump equipment 100 is connected with the heat exchanger 20 to supply heated or refrigerated fluid to the heat exchanger 20 to perform heat exchange with the food liquid stored in the tank 10 and respectively for heating and cooling the food liquid stored in the tank 10.

The heat pump equipment 100 has an outlet manifold 101 connected with the inlet duct 21 and an inlet manifold 102 connected with the outlet duct 23.

The fluid supplied by the heat pump equipment 100 enters the inlet duct 21, flows through the coil portion 22 to heat or cool the portion of the food liquid stored in the tank 10 and proximate to the coil portion 22 and then is discharged through the outlet duct 23.

A control unit (not shown in the figures) is connected with the heat pump equipment 100 to control the operation of the heat pump equipment 100 and the temperature of the fluid supplied by the heat pump equipment 100.

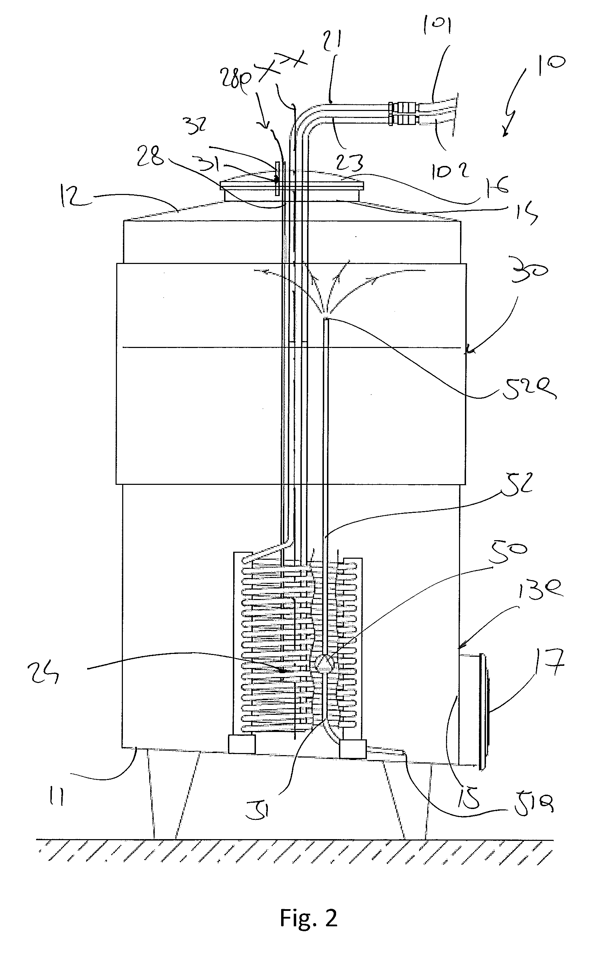

With reference to the embodiment of FIG. 2, the tank 10 comprises a base wall 11, a top wall 12 and a side wall 13 extending between the base wall 11 and the top wall 12 along a longitudinal direction X-X. This tank 10 is used for fermentation processes.

An upper opening 14 is formed in the top wall 12 and a lower opening 15 is formed in a lower portion 13a of the side wall 13.

The upper opening 14 is configured for loading the food liquid in the tank 10 and the lower opening 14 is configured for unloading the food liquid from the tank 10.

Preferably, the upper opening 14 is formed in a centre portion 14a of the top wall 12.

The tank 10 comprises an upper door 16 for closing and opening the upper opening 14 and a lower door 17 for closing and opening the lower opening 15.

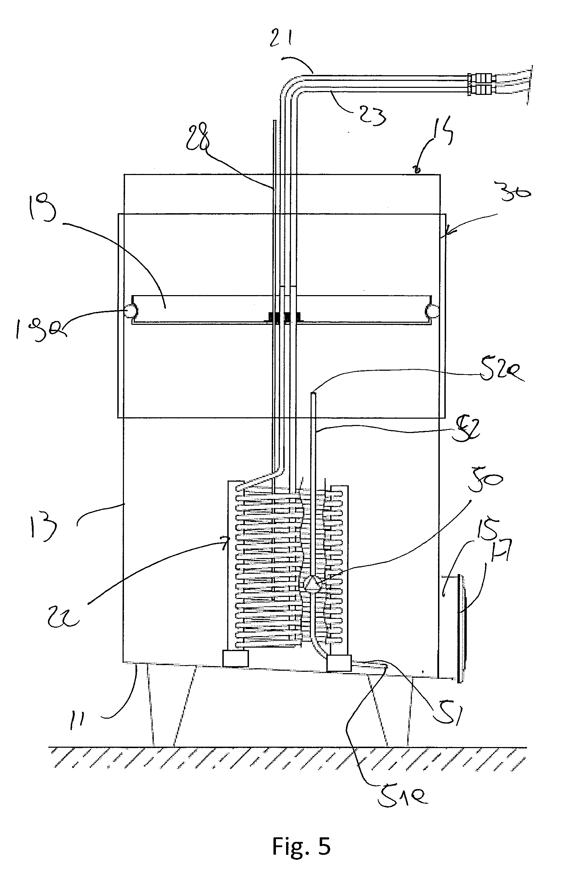

With reference to the embodiment of FIG. 5, the tank 10 is open on the top and the side wall 13 ends with a free edge defining the upper opening 14. With this embodiment, the tank 10 comprises a lid 19 floating on the food liquid stored in the tank 10 and sealing the food liquid from the outside environment by means of a sealing member 19a fixed to the lid 19 and positioned around the lid 19 between the lid 19 and the inner surface of the side wall 13 of the tank 10. This tank is used for storage of food liquids. Preferably, the lid 19 is provided with a floating member 19b that increases the floating thrust of the lid 19.

Preferably, the upper door 16 and the lower door 17 are hinged respectively to the top wall 12 and the lower portion 13a of the side wall 13 to move between a closed and an open configuration for closing and opening the respective upper opening 14 and lower opening 15.

The apparatus 1 comprises a submerged pump 50 arranged in the tank 10. The submerged pump 50 comprises a suction duct 51 with a suction inlet 51a and a delivery duct 52 with a delivery outlet 52a.

Preferably, the submerged pump 50 is fixed to the coil portion 22.

The suction inlet 51a is arranged proximate to the base wall 11 and the delivery outlet 52a is arranged longitudinally above the suction inlet 51a. With this arrangement, the submerged pump 50 sucks liquid from the bottom of the tank 10 and discharges this liquid on a higher level of the liquid stored in the tank 10 thereby mixing the bottom liquid with the higher level liquid.

Preferably, the delivery outlet 52a is arranged proximate to the top wall 12.

With the embodiment of FIG. 2, the inlet duct 21 and the outlet duct 23 pass through the upper door 16.

According to one embodiment, one aperture 16a is formed in the upper door 16 for passage of the inlet duct 21 and the outlet duct 23. According to an alternative embodiment, two apertures may be formed in the upper door 16, each aperture for passage of a respective duct of the inlet duct 21 and the outlet duct 23. Hereinafter, reference will be made in a on limiting manner to the embodiment shown in the figure with two apertures 16a.

Preferably, the upper door 16 comprises airtight members 18 configured to allow passage of the inlet duct 21 and the outlet duct 23 through the apertures 16a and to seal the apertures 16a.

According to one embodiment, the side wall 13 of the tank 10 has a side cooling portion 13b. The side cooling portion 13b extends longitudinally between a height h1 and a height h2, measured longitudinally from the base wall 11. In particular, h1 is equal to or greater than H/2, where H is the height H of the tank 10 measure longitudinally between the base wall 11 and the top wall 12.

Preferably, the tank 10 comprises a cooling band 30 arranged around the side cooling portion 13b. For example, the cooling band 30 is obtained through an annular cavity formed in the side cooling portion 13b of the side wall 13. The liquid flowing through the cooling band may be supplied by the heat pump equipment 100 or another equipment.

Preferably, the tank 10 comprises a CO₂ sensor 31 arranged in the top wall 12 and configured to detect the CO₂ generated into the tank 10. The CO₂ sensor 31 is positioned in a pipe 32 passing through the upper door 16 and in fluid communication with the tank 10.

According to one embodiment, the heat exchanger 20 comprises a temperature probe 24 fixed to the coil portion 22. The temperature probe 24 is configured to detect the temperature of the liquid. In particular, the coil portion 22 comprises a plurality of coils 22a, each coil 22a having a centre 22b. The plurality of centres 22b of the coils 22a are arranged along a centre line 22c extending along the longitudinal direction X-X.

Preferably, the temperature probe 24 is positioned along the centre line 22c. More preferably, the temperature probe 24 is positioned longitudinally in the middle of the centre line 22c, that is in the middle of the coil portion 22.

According to one embodiment, the heat exchanger 20 comprises a support frame 25 configured to support the coil portion 22 and the submerged pump 50.

Preferably, the support frame 25 comprises an inner frame 26 arranged inside the coil portion 22 and separate from the coil portion 22 and a plurality of support beams 27. The support beams 27 extend along the longitudinal direction X-X, are arranged angularly spaced around the inner frame 26 and are fixed to the inner frame 26. Moreover, each beam 27 comprises a slit 27a for passage of the coils 22a of the coil portion 22.

Preferably, each support beam 27 has a supporting foot 27b intended to lean on the base wall 11 of the tank 10.

More preferably, the inner frame 26 is made of stainless steel and the support beams 27 are made of an alimentary polymer such as PTFE.

According to one embodiment, a pipe 28 is fixed to the inner frame 26. The pipe 28 extends along the longitudinal direction X-X between the inner frame 26 and the upper door 16. A probe line 28a is arranged inside the pipe 28 and is connected with the temperature probe 24 to connect the temperature probe 24 with the control unit 103 in order to provide the control unit 103 with a temperature signal representative of the temperature detected by the temperature probe 24. Preferably, the pipe 28 is airtight coupled with the upper door 16.

## Claims

1. An apparatus (1) for controlling the temperature of a food liquid, comprising:
- a tank (10) for storing a food liquid,
- a heat exchanger (20) arranged in said tank (10),
- a heat pump equipment (100) connected with said heat exchanger (20) and configured to supply a heated or refrigerated fluid,
wherein:
said tank (10) comprises:
- a base wall (11),
- a side wall (13) extending from said base wall (11) along a longitudinal direction (X-X),
- a lower opening (15) formed in a lower portion (13a) of said side wall (13),
- an upper opening (14),
- a lower door (17) for closing and opening said lower opening (15),
said heat exchanger (20) comprises:
- an inlet duct (21) configured to receive the fluid supplied by said heat pump equipment (100),
- a coil portion (22) connected to said inlet duct (21) and configured to allow heat exchange between said fluid and the food liquid stored in the tank (10),
- an outlet duct (23) connected to said coil portion (23) and configured to deliver the fluid coming from the coil portion (22) to the heat pump equipment (100),
**characterized in that**
- a submerged pump (50) is arranged in the tank (10),
- said submerged pump (50) comprises a suction duct (51) with a suction inlet (51a) and a delivery duct (52) with a delivery outlet (52a),
- said suction inlet (51a) is arranged proximate to the base wall (11) and said delivery outlet (52a) is arranged longitudinally above said suction inlet (51 a).

2. The apparatus (1) according to claim 1, wherein:
- said tank (10) comprises a top wall (12),
- said side wall (13) extends between said base wall (11) and said top wall (12) along said longitudinal direction (X-X),
- said upper opening (14) is formed in said top wall (12),
- an upper door (16) is provided for closing and opening said upper opening (14).
- said inlet duct (21) and said outlet duct (23) pass through said upper door (16).

3. The apparatus (1) according to claim 2, wherein:
- said delivery outlet (52a) is arranged proximate to the top wall (12).

4. The apparatus (1) according to any of claims 1 to 3, wherein:
- said submerged pump (50) is fixed to said coil portion (22).

5. The apparatus (1) according to claim 1, wherein:
- the tank (10) is open on the top,
- the side wall (13) ends with a free edge defining the upper opening (14),
- a lid (19) is arranged in the tank (10) and is configured to float on the food liquid stored in the tank (10) and seal the food liquid stored in the tank (10).

6. The apparatus (1) according to claim 5, wherein:
- said lid (19) comprises a sealing member (19a) positioned around the lid (19) between the lid (19) and the inner surface of the side wall (13) of the tank (10).

7. The apparatus according to anyone of claims 1 to 6, wherein:
- said heat exchanger (20) comprises a temperature probe (24) fixed to the coil portion (22) and configured to detect the temperature of the food liquid stored in the tank (10) proximate to said temperature probe (24).

8. The apparatus according to claim 7, wherein:
- said coil portion (22) comprises a plurality of coils (22a) connected one another and spaced apart longitudinally,
- each coil (22a) has a centre (22b),
- the plurality of centres (22b) of the coils (22a) are arranged along a centre line (22c) extending along the longitudinal direction (X-X),
- said temperature probe (24) is positioned along the centre line (22c),

9. The apparatus according to claim 8, wherein:
- said temperature probe (24) is positioned longitudinally in the middle of the centre line (22c).

10. The apparatus according to anyone of claims 1 to 9, wherein:
- said heat exchanger (20) comprises a support frame (25) configured to support the coil portion (22) and said submerged pump (50),
- said support frame (25) comprises an inner frame (26) arranged inside the coil portion (22) and separate from the coil portion (22) and a plurality of support beams (27),
- the support beams (27) extend along the longitudinal direction (X-X), are arranged angularly spaced around the inner frame (26) and are fixed to the inner frame (26),
- each support beam (27) comprises a slit (27a) for passage of the coils (22a) of the coil portion (22).

11. The apparatus according to claim 10, wherein:
- each support beam (27) has a supporting foot (27b) intended to lean on the base wall (11) of the tank (10).

12. The apparatus according to claim 11, wherein:
- a pipe (28) is fixed to the inner frame (26),
- said pipe (28) extends along the longitudinal direction (X-X) between the inner frame (26) and the upper door (16),
- a probe line (28a) is arranged inside the pipe (28) and is connected with the temperature probe (24) to connect the temperature probe (24) with a control unit (103) of the heat pump equipment (100) to provide the control unit (103) with a temperature signal representative of the temperature detected by the temperature probe (24).
